# EUROPÄISCHE PATENTSCHRIFT

(11) **EP 0 506 837 B1**
(45) Veröffentlichungstag und Bekanntmachung des Hinweises auf die Patenterteilung: **07.06.1995**
(21) Anmeldenummer: 91902289.7
(22) Anmeldetag: 20.12.1990
(51) Int. Cl.: F16B 21/08, F16L 55/11

(54) **ARRETIERVORRICHTUNG**
LOCKING DEVICE
DISPOSITIF D'ARRET

(30) Priorität: 22.12.1989 DE 3942526
(43) Veröffentlichungstag der Anmeldung: 07.10.1992
(73) Patentinhaber: Volkswagen Aktiengesellschaft, 38436 Wolfsburg (DE)
(72) Erfinder: PRÜSS, Ludwig, D-3300 Braunschweig (DE)
(86) Internationale Anmeldenummer: EP9002275
(87) Internationale Veröffentlichungsnummer: WO9110071

(56) Entgegenhaltungen:
- EP-A- 0 185 168
- EP-A- 0 325 898
- EP-A- 0 374 070
- GB-A- 2 181 179
- US-A- 3 893 487
- Feinmechanische Bauelemente, Prof. Dr.-Ing. Siegfried Hildebrand, 3. Auflage, Carl Hanser Verlag München Wien 1978, Seiten 243, 244

## Beschreibung

Die Erfindung betrifft eine Arretiervorrichtung gemäß dem Oberbegriff des Patentanspruchs 1.

Beispielsweise in der Fluidsteuerungstechnik werden Stopfen verwendet, die für einen in einer Bohrung bewegbaren Steuerkolben als Anschlage ausgebildet sind und überdies die Bohrung gegen den Austritt von hydraulischer Flüssigkeit abdichten. Es sind allgemein Stopfen bekannt, die durch Fixiermittel wie Bolzen, Stifte oder Sprengringe auch bei dynamisch hohen Beanspruchungen mit Bezug auf das sie umgebende Gehäuse eindeutig festgelegt sind. Nachteilig an dieser Art der Stopfenarretierung ist jedoch die Vielzahl von Einzelteilen sowie ein hoher Fertigungs- und Montageaufwand, insbesondere beim Ausbau des Stopfens.

Aus der gattungsbildenden EP-A-0 185 168 ist ein eine Bohrung abdichtender Stopfen bekannt, an dem ein Rastmittel angeformt ist, das eine quer zur Längsachse der Bohrung ausgerichtete Wandung hintergreift. Die dort beschriebene Konstruktion bereitet jedoch Probleme bei der Demontage, weil das Rastmittel von außen nicht zugänglich ist.

Vor diesem Hintergrund liegt der Erfindung die Aufgabe zugrunde, für einen Stopfen der eingangs genannten Art eine Arretiervorrichtung so auszubilden, daß der Stopfen leicht ein- und ausgebaut werden kann. Dabei soll der Stopfen auch bei hohen dynamischen Belastungen einwandfrei fixiert sein.

Die Lösung dieser Aufgabe ergibt sich aus den Merkmalen des Patentanspruchs 1. Die Unteransprüche enthalten zweckmäßige Weiterbildungen der Erfindung.

Besonders kostengünstig kann eine erfindungsgemäße Arretiervorrichtung in der Massenfertigung dann realisiert werden, wenn der Stopfen aus spritzfähigem Kunststoff und das den Stopfen aufnehmende Gehäuse aus einem Druckgußmaterial gehalten ist. Alle für die Arretiervorrichtung wesentlichen Konstruktionselemente können bereits beim Verformen von Stopfen und Gehäuse vorgesehen werden, so daß keinerlei spanabhebende Bearbeitung mehr notwendig wird. Durch eine hohlzylindrische Gestaltung des Stopfens lassen sich Materialeinsparungen erzielen, die ebenfalls wirtschaftliche Vorteile ermöglichen.

In der Zeichnung sind besonders vorteilhafte Ausführungsbeispiele der Erfindung dargestellt. Es zeigt
- Figur 1: für ein erstes Ausführungsbeispiel in einem Längsschnitt einen in einer Gehäusebohrung versenkten und dort arretierten ersten Stopfen,
- Figur 2: eine Draufsicht dieses Stopfens gemäß Schnitt II-II;
- Figur 3: für ein zweites Ausführungsbeispiel in einem Längsschnitt einen in einer Gehäusebohrung versenkten und dort arretierten zweiten Stopfen und
- Figur 4: eine Draufsicht des zweiten Stopfens gemäß Schnitt IV-IV.

In allen Figuren sind gleiche Bauteilabschnitte mit gleichen Bezifferungen versehen.

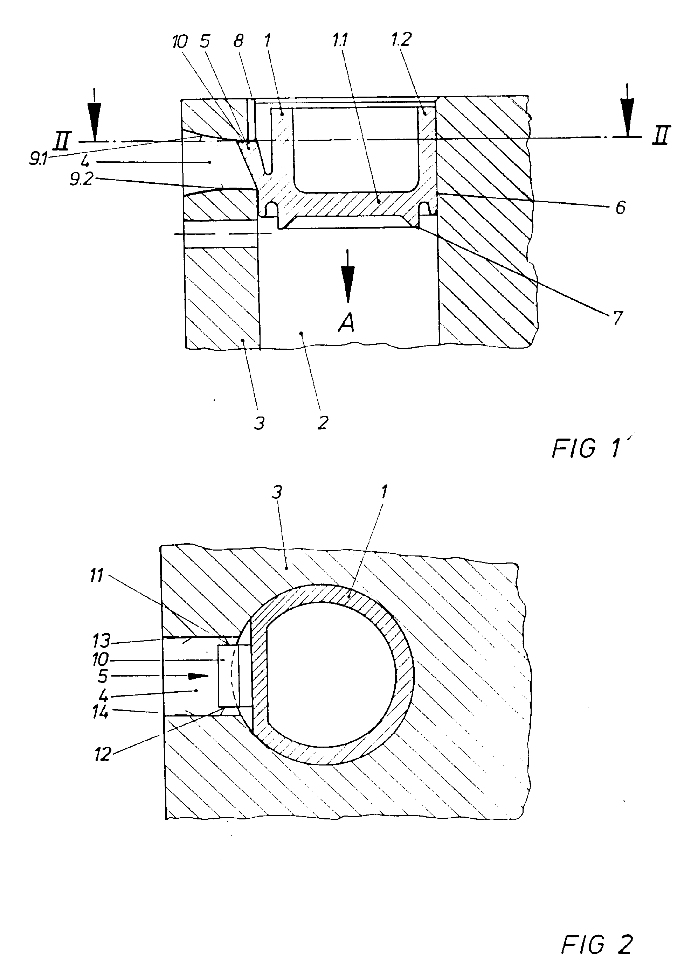

Man erkennt in Figur 1 einen hier hohlzylindrisch ausgebildeten Stopfen 1, dessen verschlossenes Ende mit 1.1 bezeichnet ist. Die Zylinderaußenwand 1.2 des Stopfens 1 liegt abschnittsweise an einer hier nicht näher bezifferten Wandung der Bohrung 2 an. Diese befindet sich in einem Gehäuse 3, das beispielsweise Bestandteil eines Schieberkastens einer Fluidsteuerung sein kann und hier als Druckgußteil ausgebildet ist. Im wesentlichen senkrecht zur Achse der Bohrung 2 ist in das Gehäuse 3 eine Durchgangsöffnung 4 eingegossen, in die ein Halteelement 5 eingreift. Dieses ist an der Zylinderaußenwand 1.2 des Stopfens 1 nach außen abstehend zungenartig angeformt und in Richtung der Zylinderaußenwand 1.2 federelastisch biegbar. Darüber hinaus weist der Stopfen 1 eine Dichtlippe 6 sowie eine Ringschulter 7 auf, die beispielsweise ein Anschlag für einen hier nicht dargestellten, in der Bohrung 2 bewegbaren Steuerkolben sein kann. In das Gehäuse 3 sind ferner eine bis zur Durchgangsöffnung 4 reichende Längsnut 8 sowie Anschlagflächen 9.1 und 9.2 eingegossen. An der Anschlagfläche 9.1 liegt eine Abstützfläche 10 des Halteelementes 5 im wesentlichen flächenberührend und somit wenig verschleißanfällig an.

Die Draufsicht in Figur 2 zeigt Seitenflächen 11 und 12 des Halteelementes 5, die zur Sicherung des Stopfens 1 gegen Verdrehung an Wandungen 13 und 14 der Durchgangsöffnung 4 zur Anlage gebracht werden können. Das Spiel zwischen den Seitenflächen 11, 12 und den Wandungen 13, 14 ist so gewählt, daß das Halteelement 5 ohne Probleme in der Durchgangsöffnung 4 einrasten kann.

Das in der Zeichnung dargestellte Ausführungsbeispiel ist besonders leicht montierbar. Der Stopfen 1 wird zunächst so in die Bohrung 2 eingesetzt, daß das Halteelement 5 mit der Längsnut 8 fluchtet. Anschließend wird der Stopfen 1 in der Bohrung 2 versenkt. Dabei wird das Halteelement 5 federelastisch in Richtung der Zylinderaußenwand 1.2 so lange gebogen, bis die Abstützfläche 10 des Halteelementes 5 an der Anschlagfläche 9 der Durchgangsbohrung 4 vorbeibewegt worden ist. Diese Einsetzbewegung in Pfeilrichtung A wird begrenzt durch die aus der Anschlagfläche 9.2 und der Bohrung 2 gebildete Kante. An dieser läuft das nach außen ausgestellte Halteelement 5 nämlich auf und das federelastisch gebogene Halteelement 5 rastet in der Durchgangsöffnung 4 ein. Der Stopfen 1 befindet sich somit in der in der Zeichnung dargestellten Position und ist durch das Halteelement 5 nun sowohl axial als auch radial in der Bohrung 2 eindeutig fixiert. Besonders hervorzuheben ist, daß das Einstecken des Stopfens 1 in die Bohrung 2 von Hand ohne zusätzliche Montagewerkzeuge möglich ist. Darüber hinaus ist der Montagevorgang mit sehr geringem apparativem Aufwand auch automatisierbar.

Ebenfalls mit geringem Aufwand kann der Stopfen 1 wieder aus der Bohrung 2 entfernt werden. Zu diesem Zweck ist mit einem dorn- oder stiftartigen Werkzeug durch die Durchgangsöffnung 4 hindurch das Halteelement 5 in Richtung der Zylinderaußenwand 1.2 zurückzudrücken, und zwar mindestens so weit, daß das Halteelement 5 in die Längsnut 8 hineinbewegt werden kann. Damit ist die axiale Fixierung des Stopfens 1 in der Bohrung 2 aufgehoben. Durch schräges Ansetzen des dorn- oder stiftartigen Werkzeuges wird beim Herunterdrücken des Halteelementes 5 gleichzeitig eine Axialbewegung entgegen der Pfeilrichtung A bewirkt. Dies erleichtert das Entfernen des Stopfens 1 aus der Bohrung 2. Bei einem besonders vorteilhaften Ausführungsbeispiel fluchten die Seitenflanken der Längsnut 8 mit den Wandungen 13 und 14 der Durchgangsöffnung 4, so daß das Halteelement 5 für die Demontage des Stopfens 1 nur bis zur Grundfläche der Längsnut 8 heruntergedrückt werden muß.

Eine weitere Erleichterung der Montage wird durch die Dichtlippe 6 bewirkt. Diese allein sorgt für den dichtenden Abschluß der Bohrung 2. Die Abmessungen der Zylinderaußenwand 1.2 können dann mit Bezug auf den Durchmesser der Bohrung 2 mit einer Spielpassung versehen werden. Dadurch wird sowohl beim Einsetzen als auch beim Entfernen des Stopfens 1 die Reibung zwischen Stopfen 1 und Gehäuse 3 erheblich herabgesetzt. Zur Erhöhung der Dichtwirkung des Stopfens 1 kann zwischen Ringschulter 7 und Dichtlippe 6 beispielsweise auch ein O-Ring eingelegt werden, der eine Vorspannung der Dichtlippe 6 gegen die Wandung der Bohrung 2 bewirkt.

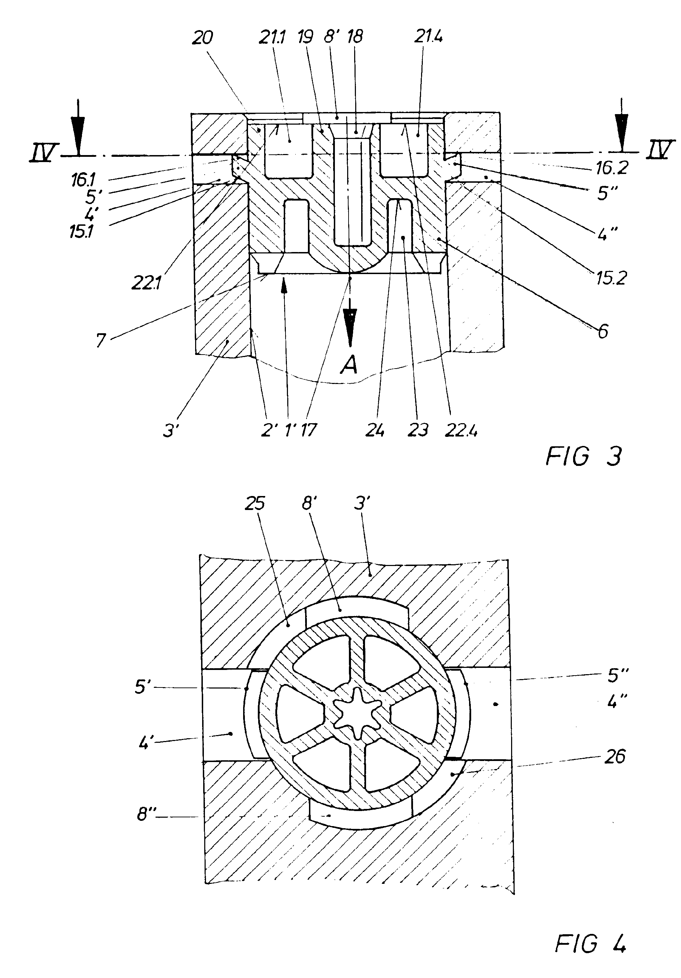

Figur 3 zeigt einen Stopfen 1′, der hier in einer Bohrung 2′ eines Gehäuses 3′ angeordnet ist. Dieses ist mit direkt eingegossenen Durchgangsöffnungen 4′ und 4˝ versehen, in die als Halteelemente 5′ und 5˝ ausgebildete Nasen eingreifen, welche jeweils mit einer vorderen Schräge 15.1 bzw. 15.2 und einer hinteren Schräge 16.1 bzw. 16.2 versehen sind. Die vorderen Schrägen 15.1 bzw. 15.2 schließen mit der Rotationsachse 17 des Stopfens 1′ zweckmäßigerweise einen Winkel von 55 - 65° ein. Die hinteren Schrägen 16.1 bzw. 16.2 sind der Deutlichkeit halber übertrieben stark dargestellt und sollten mit der Rotationsachse 17 einen Winkel von 87 - 89° einschließen. Wie der Stopfen 1 weist auch der Stopfen 1′ eine umlaufende Dichtlippe 6 zur Abdichtung der Bohrung 2′ sowie eine Ringschulter 7 auf. Darüber hinaus ist im Stopfen 1′ noch eine polygonartige Öffnung 18 vorgesehen, in die ein entsprechend ausgeformtes Montagewerkzeug zur Verdrehung des Stopfens 1′ hineingesteckt werden kann. Aus Gründen der Materialersparnis sind zwischen einer die Öffnung 18 aufweisenden Innenhülse 19 und einer an der Wandung der Bohrung 2′ anliegenden Außenhülse 20 Taschen 21.1 - 21.6 (in dieser Figur sind nur die Taschen 21.1 und 21.4 sichtbar) vorgesehen, die durch Rippenstege 22.1 - 22.6 (hier sichtbar 22.1 und 22.4) voneinander getrennt sind. Eine zwischen der Innenhülse 19 und der Außenhülse 20 verlaufende Ringnut 23, deren Boden 24 umlaufend dicht ist, kann beipsielsweise eine hier nicht weiter dargestellte Feder aufnehmen. Von besonderer Wichtigkeit für die Funktionsweise der Arretiervorrichtung sind Längsnuten 8′ und 8˝ (letztere in dieser Figur nicht sichtbar), die sich bis auf Höhe der unteren Kante der Durchgangsöffnungen 4′ und 4˝ erstrecken.

Zum besseren Verständnis der Funktionsweise zeigt Figur 4 noch teilringartige Nuten 25 und 26, durch die die Halteelemente 5′ und 5˝ aus den Längsnuten 8′ bzw. 8˝ heraus zu den Durchgangsöffnungen 4′ und 4˝ hindurchbewegt werden können, wenn der Stopfen 1′ entsprechend tief in die Bohrung 2′ eingedrückt und anschließend verdreht wird. Mit Hilfe eines einfachen in die öffnung 18 hineinzusteckenden Werkzeuges kann der Stopfen 1′ also durch eine Schiebe- und eine Drehbewegung montiert und auf gleiche Weise in umgekehrter Reihenfolge demontiert werden.

Das Ausführungsbeispiel gemäß der Figuren 3 und 4 ist auch mit einem Halteelement oder mehr als zwei Halteelementen denkbar. Die Anbringung einer hinteren Schräge an den Halteelementen 5′ und 5˝ hat den Vorteil, daß sich diese bei einer Belastung des Stopfens 1′ durch eine höhere Kraft entgegen der Pfeilrichtung A noch setzen können. Nach erfolgter Setzbewegung liegen die Halteelemente 5′ und 5˝ dann satt auf den Wandungen der Durchgangsöffnungen 4′ und 4˝ an, so daß ihre Beanspruchung auf eine größere Fläche verteilt wird. Dies wirkt sich besonders positiv auf die Erhöhung der Lebensdauer eines solchen Stopfens aus.

Durch die im wesentlichen hohlzylindrische Ausgestaltung ergeben sich für die Massenherstellung der erfindungsgemäßen Stopfen erhebliche Materialeinsparungen. Darüber hinaus sind die Wandungsdicken der Stopfen 1 bzw. 1′ so bemessen, daß beim Spritzgießen eines aus Kunststoff hergestellten Stopfens 1 bzw. 1′ optimale Fließverhältnisse erreicht werden. Für die Fertigung der aus Stopfen und Gehäuse gebildeten Arretiervorrichtung ist keinerlei spanabhebende und damit teure Bearbeitung notwendig. Somit ergeben sich besonders für das in der Zeichnung dargestellte Ausführungsbeispiel wirtschaftliche Vorteile nicht nur durch die vereinfachte Montage, sondern auch durch Materialeinsparungen und verringerten Fertigungsaufwand.

## Patentansprüche

1. Arretiervorrichtung für einen in einer Bohrung (2; 2′) eines Gehäuses (3; 3′) zumindest teilweise versenkten Stopfen (1; 1′), an dem zu seiner Verdrehsicherung und axialen Fixierung in der Bohrung (2; 2′) materialeinheitlich wenigstens ein zungenartiges Rastmittel (5; 5′,5˝) angeformt ist, das eine quer zur Längsachse (17) der Bohrung (2; 2′) laufende Wandung des Gehäuses (3; 3′) hintergreift, dadurch gekennzeichnet, daß die Wandung Bestandteil einer quer zur Längsachse (17) der Bohrung (2; 2′) ausgerichteten Durchgangsöffnung (4; 4′,4˝) des Gehäuses ist und an einem verschlossenen Ende des Stopfens (1; 1′) auf der die Bohrung (2; 2′) abdichtenden Seite eine umlaufende Ringschulter (7) vorgesehen ist.

2. Arretiervorrichtung nach Anspruch 1, dadurch gekennzeichnet, daß der Stopfen (1; 1′) wenigstens ein besonders ausgebildetes Dichtmittel aufweist, das mit Bezug auf die Versenkbewegung des Stopfens (1; 1′) vor dem Rastmittel (5; 5′, 5˝) angeordnet ist.

3. Arretiervorrichtung nach Anspruch 1 oder 2, dadurch gekennzeichnet, daß der Stopfen (1; 1′) im wesentlichen ein einseitig verschlossener Hohlzylinder ist.

4. Arretiervorrichtung nach wenigstens einem der Ansprüche 2 und 3, dadurch gekennzeichnet, daß der Stopfen (1; 1′) und das Dichtmittel materialeinheitlich ausgebildet sind.

5. Arretiervorrichtung nach wenigstens einem der Ansprüche 1 bis 4, dadurch gekennzeichnet, daß der Stopfen (1; 1′) aus spritzfähigem Kunststoff besteht.

6. Arretiervorrichtung nach wenigstens einem der Ansprüche 1 bis 5, dadurch gekennzeichnet, daß das Rastmittel sowohl zur radialen als auch zur axialen Fixierung integraler Bestandteil eines Halteelements (5; 5′ und 5˝) ist.

7. Arretiervorrichtung nach wenigstens einem der Ansprüche 1 bis 6, dadurch gekennzeichnet, daß das Gehäuse (3; 3′) ein Gußteil ist, und daß die das Rastmittel abstützende Durchgangsöffnung (4; 4′ und 4˝) in das Gehäuse (3; 3′) eingegossen ist.

8. Arretiervorrichtung nach wenigstens einem der Ansprüche 1 bis 7, dadurch gekennzeichnet, daß das Rastmittel federelastisch biegbar angeformt ist.

9. Arretiervorrichtung nach Anspruch 8, dadurch gekennzeichnet, daß das Halteelement (5) an der Zylinderaußenwand (1.2) des Stopfens (1) nach außen abstehend zungenartig angeformt und zumindest in Richtung der Zylinderaußenwand (1.2) federelastisch biegbar ist.

10. Arretiervorrichtung nach den Ansprüchen 8 oder 9, dadurch gekennzeichnet, daß das Querschnittsprofil der Durchgangsöffnung (4) zumindest in dem das Halteelement (5) abstützenden Bereich so ausgebildet ist, daß das Halteelement (5) mit einem vorgebbaren Verdrehspiel in die Durchgangsöffnung (4) eingepaßt ist.

11. Arretiervorrichtung nach den Ansprüchen 9 und 10, dadurch gekennzeichnet, daß das freie Ende (Abstützfläche 10) des zungenartigen Halteelementes (5) zur axialen Fixierung an der Wandung (9.1) der Durchgangsöffnung (4) flächenberührend abgestützt ist.

12. Arretiervorrichtung nach wenigstens einem der Ansprüche 1 bis 11, dadurch gekennzeichnet, daß in dem Gehäuse (3) die Bohrung (2) eine wenigstens bis zur Durchgangsöffnung (4) reichende, eingegossene Längsnut (8) aufweist, in der beim Einsetzen des Stopfens (1) in die Bohrung (2) das Halteelement (5) federelastisch gebogen so lange geführt wird, bis es in die Durchgangsöffnung (4) aufgrund federelastischer Rückstellkräfte selbsttätig einrastet.

13. Arretiervorrichtung nach wenigstens einem der Ansprüche 1 bis 7, dadurch gekennzeichnet, daß das Halteelement (5′, 5˝) im wesentlichen durch eine an der Zylinderaußenwand des Stopfens (1′) nach außen abstehende und im wesentlichen unverformbare Nase gebildet ist.

14. Arretiervorrichtung nach Anspruch 13, dadurch gekennzeichnet, daß sowohl die in Einsetzbewegungsrichtung des Stopfens (1′) vorn als auch die hinten liegende Kante der Nase eine nach hinten weisende Schräge (15.1, 15.2; 16.1, 16.2) aufweisen.

15. Arretiervorrichtung nach den Ansprüchen 13 oder 14, dadurch gekennzeichnet, daß der einseitig verschlossene Hohlzylinder des Stopfens (1′) eine polygonartige Öffnung (18) aufweist.

16. Arretiervorrichtung nach Anspruch 15, dadurch gekennzeichnet, daß die die polygonartige Öffnung (18) in einer Hülse (Innenhülse 19) angeordnet ist, die über rippenartige Verbindungen (Rippenstege 22.1 - 22.6) mit einer Wandung des Hohlzylinders (Außenhülse 20) verbunden ist.

17. Arretiervorrichtung nach wenigstens einem der Ansprüche 13 bis 16, dadurch gekennzeichnet, daß in dem Gehäuse (3′) die Bohrung (2′) zur Führung des Halteelementes (5′; 5˝) eine wenigstens bis auf Höhe der Durchgangsöffnung (4′; 4˝) reichende, eingegossene Längsnut (8′, 8˝) aufweist, die zur Durchgangsöffnung winkelversetzt angeordnet und mit dieser über eine eingegossene, zumindest teilringartige Nut (25, 26) verbunden ist.

18. Arretiervorrichtung nach wenigstens einem der Ansprüche 1 bis 17, dadurch gekennzeichnet, daß an dem Stopfen (1; 1′) im Bereich des verschlossenen Endes (1.1) des Hohlzylinders eine umlaufende Dichtlippe (6) angeordnet ist.

## Claims

1. A locking device for a stopper (1; 1′) at least partially sunk in a bore (2; 2′) in a housing (3; 3′), wherein in order to prevent the rotation of the stopper and to fix said stopper in an axial direction in the bore (2; 2′) at least one tongue-shaped latching means (5; 5′, 5˝) is formed in the identical material as a unitary construction with the said stopper, which latching means engages behind a wall of the housing (3; 3′) which wall extends transversely to the longitudinal axis (17) of the bore (2; 2′), characterised in that the wall is part of a through-going orifice (4; 4′, 4˝) directed transversely to the longitudinal axis (17) of the bore (2; 2′) and a circumferential annular shoulder (7) is provided at a closed end of the stopper (1; 1′) on the side sealing the bore (2; 2′).

2. A locking device according to claim 1, characterised in that the stopper (1; 1′) comprises at least one especially designed sealing means, which is disposed with respect to the lowering movement of the stopper (1; 1′) in advance of the latching means (5; 5′, 5˝).

3. A locking device according to claim 1 or 2, characterised in that the stopper (1;1′) is substantially a hollow cylinder closed on one side.

4. A locking device according to at least one of claims 2 and 3, characterised in that the stopper (1; 1′) and the sealing means are made from the same material.

5. A locking device according to at least one of claims 1 to 4, characterised in that the stopper (1: 1′) is made from a synthetic material which can be injection moulded.

6. A locking device according to at least one of claims 1 to 5, characterised in that the latching means is for the purpose of fixing in the radial and also the axial direction an integral component part of a retaining element (5; 5′ and 5˝).

7. A locking device according to at least one of claims 1 to 6, characterised in that the housing (3; 3′) is a cast part and that the through-going orifice (4; 4′ and 4˝), which supports the latching means, is cast as one in the housing (3; 3′).

8. A locking device according to at least one of claims 1 to 7, characterised in that the latching means is elastic and flexible and formed as a unitary construction.

9. A locking device according to claim 8, characterised in that the retaining element (5) is formed as one at the cylinder external wall (1.2) of the stopper (1) and is in the shape of a tongue protruding outwards and is elastic and flexible at least in the direction of the cylinder external wall (1.2).

10. A locking device according to the claims or 9, characterised in that the cross-sectional profile of the through-going orifice (4) is designed at least in the region supporting the retaining element (5) in such a manner that the retaining element (5) fits with a predetermined amount of rotational clearance into the through-going orifice (4).

11. A locking device according to the claims 9 and 10, characterised in that the free end (support surface 10) of the tongue-like retaining element (5) is supported in a surface-contacting manner in order to be axially fixed at the wall (9.1) of the through-going orifice (4).

12. A locking device according to at least one of claims 1 to 11, characterised in that in the housing (3) the bore (2) comprises a longitudinal groove (8) which is cast as one and extends at least as far as the through-going orifice (4), in which longitudinal groove, when inserting the stopper (1) into the bore (2), the retaining element (5) is guided in an elastic and curved manner until by reason of the elastic restoring forces it automatically latches in the through-going orifice (4).

13. A locking device according to at least one of claims 1 to 7, characterised in that the retaining element (5′, 5˝) is formed substantially by virtue of a projection which protrudes outwards at the cylinder external wall of the stopper (1′) and is substantially nonworkable.

14. A locking device according to claim 13, characterised in that the edges of projection lying forwards and rearwards in the direction of the insertion movement of the stopper (1′) are both inclined rearwards (15.1, 15.2; 16.1, 16.2).

15. A locking device according to claims 13 or 14, characterised in that the hollow cylinder of the stopper (1′) which is closed on one side comprises a polygonal orifice (18).

16. A locking device according to claim 15, characterised in that the polygonal orifice (18) is disposed in a sleeve (inner sleeve 19) which is connected to a wall of the hollow cylinder (external sleeve 20) by way of rib-type connections (webs of a rib 22.1-22.6).

17. A locking device according to at least one of claims 13 to 16, characterised in that in the housing (3′) the bore (2;) comprises for the purpose of guiding the retaining element (5′; 5˝) a longitudinal groove (8′, 8˝) which is cast as one and extends to the level of the through-going orifice (4′;4˝), which longitudinal groove is disposed at an angle offset with respect to the through-going orifice and is connected thereto by way of an at least partially annular groove (25, 25) which is cast as one.

18. A locking device according to at least one of claims 1 to 17, characterised in that a circumferential sealing lip (6) is disposed at the stopper (1; 1′) in the region of the closed end (1.1) of the hollow cylinder.

## Revendications

1. Dispositif d'arrêt pour un bouchon (1; 1′) noyé au moins partiellement dans un alésage (2; 2′) aménagé dans un carter (3; 3′), bouchon sur lequel est conformé au moins un moyen d'encliquetage (5; 5′, 5˝) en forme de languette, faisant matériellement partie intégrante de celui-ci, qui s'engage derrière une paroi du carter (3; 3′) s'étendant transversalement par rapport à l'axe longitudinal (17) de l'alésage (2; 2′),
caractérisé en ce que la paroi fait partie d'une ouverture d'accès (4; 4′, 4˝) orientée transversalement par rapport à l'axe longitudinal (17) de l'alésage (2; 2′), et en ce qu'un épaulement circonférentiel (7) est prévu à une extrémité borgne du bouchon (1; 1′), du côté obturant de façon étanche l'alésage (2; 2′).

2. Dispositif d'arrêt selon la revendication 1, caractérisé en ce que le bouchon (1; 1′) comporte au moins un moyen d'étanchéité configuré de façon particulière, qui, dans le sens du mouvement d'enfoncement du bouchon (1; 1′), est disposé devant le moyen d'encliquetage (5; 5′, 5˝).

3. Dispositif d'arrêt selon la revendication 1 ou 2, caractérisé en ce que le bouchon (1; 1′) est pour l'essentiel un cylindre creux borgne.

4. Dispositif d'arrêt selon l'une au moins des revendications 2 et 3, caractérisé en ce que le bouchon (1; 1′) et le moyen d'étanchéité sont formés d'un seul tenant de la même matière.

5. Dispositif d'arrêt selon l'une au moins des revendications 1 à 4, caractérisé en ce que le bouchon (1; 1′) est réalisé en matière plastique pouvant être moulée par injection.

6. Dispositif d'arrêt selon l'une au moins des revendications 1 à 5, caractérisé en ce que le moyen d'encliquetage fait partie intégrante d'un élément de maintien (5; 5′ et 5˝) assurant à la fois la fixation radiale et la fixation axiale.

7. Dispositif d'arrêt selon l'une au moins des revendications 1 à 6, caractérisé en ce que le carter (3, 3′) est une pièce moulée, et en ce que l'ouverture d'accès (4; 4′ et 4˝) soutenant le moyen d'encliquetage est moulée en même temps que le carter (3; 3′).

8. Dispositif d'arrêt selon l'une au moins des revendications 1 à 7, caractérisé en ce que le moyen d'encliquetage est conformé de manière à être élastiquement flexible.

9. Dispositif d'arrêt selon la revendication 8, caractérisé en ce que l'élément de maintien (5) est conformé sur la paroi cylindrique extérieure (1.2) du bouchon (1) en saillant vers l'extérieur sous forme d'une languette, et est élastiquement flexible au moins en direction de la paroi cylindrique extérieure (1.2).

10. Dispositif d'arrêt selon les revendications 8 ou 9, caractérisé en ce que le profil de section transversale de l'ouverture d'accès (4) est configuré, au moins dans la partie soutenant l'élément de maintien (5), de manière telle que l'élément de maintien (5) s'ajuste dans l'ouverture d'accès (4) avec un jeu de pivotement prédéfinissable.

11. Dispositif d'arrêt selon les revendications 9 et 10, caractérisé en ce que l'extrémité libre (la face d'appui 10) de l'élément de maintien (5) en forme de languette s'appuie sur la paroi (9.1) de l'ouverture d'accès (4), en assurant un contact superficiel, pour effectuer la fixation axiale.

12. Dispositif d'arrêt selon l'une au moins des revendications 1 à 11, caractérisé en ce qu'à l'intérieur du carter (3), l'alésage (2) comporte une rainure longitudinale moulée (8) s'étendant au moins jusqu'à l'ouverture d'accès (4), dans laquelle, lors de l'insertion du bouchon (1) dans l'alésage (2), l'élément de maintien (5) est replié de façon élastique et est guidé jusqu'à ce qu'il s'enclenche automatiquement dans l'ouverture d'accès (4), du fait des forces de rappel élastiques.

13. Dispositif d'arrêt selon l'une au moins des revendications 1 à 7, caractérisé en ce que l'élément de maintien (5′, 5˝) est constitué essentiellement par un nez essentiellement indéformable, saillant vers l'extérieur, ménagé sur la paroi cylindrique extérieure du bouchon (1′).

14. Dispositif d'arrêt selon la revendication 13, caractérisé en ce que, dans le sens de l'insertion du bouchon (1′), à la fois le bord avant et le bord arrière du nez présentent un chanfrein (15.1, 15.2; 16.1, 16.2) incliné vers l'arrière.

15. Dispositif d'arrêt selon les revendications 13 ou 14, caractérisé en ce que le cylindre creux borgne du bouchon (1′) comporte une ouverture polygonale (18).

16. Dispositif d'arrêt selon la revendication 15, caractérisé en ce que l'ouverture polygonale (18) est aménagée dans une douille (douille intérieure 19), qui est reliée à une paroi du cylindre creux (douille extérieure 20) par l'intermédiaire de liaisons sous forme d'âmes (nervures 22.1 à 22.6).

17. Dispositif d'arrêt selon l'une au moins des revendications 13 à 16, caractérisé en ce que, dans le carter (3′), l'alésage (2′) comporte une rainure longitudinale moulée intégrée (8′, 8) s'étendant au moins jusqu'au niveau de l'ouverture d'accès 4˝) assurant le guidage de l'élément de maintien (5′; 5˝), la rainure étant disposée de façon angulairement décalée par rapport à l'ouverture d'accès et reliée à celle-ci par l'intermédiaire d'une rainure moulée intégrée (25, 26) réalisée au moins en forme d'anneau partiel.

18. Dispositif d'arrêt selon l'une au moins des revendications 1 à 17, caractérisé en ce qu'au niveau de l'extrémité borgne (1.1) du cylindre creux, une lèvre d'étanchéité circonférentielle (6) est agencée sur le bouchon (1; 1′).
